# EUROPÄISCHE PATENTSCHRIFT

(11) **EP 2 020 785 B1**
(45) Veröffentlichungstag und Bekanntmachung des Hinweises auf die Patenterteilung: **31.10.2018**
(21) Anmeldenummer: 08008221.7
(22) Anmeldetag: 30.04.2008
(51) Int. Cl.: H04W 74/04, H04W 72/08, H04W 84/18

(54) **Verfahren und System zur bidirektionalen Funkkommunikation**
Method and system for bidirectional radio communication
Procédé et système de communication radio bidirectionnelle

(30) Priorität: 03.08.2007 DE 102007036751
(43) Veröffentlichungstag der Anmeldung: 04.02.2009
(73) Patentinhaber: ista International GmbH, 45131 Essen (DE)
(72) Erfinder: Bley, Bert, Dipl.-Ing., 45130 Essen (DE); Niederfeld, Gerhard, Dipl.-Ing., 45131 Essen (DE)
(74) Vertreter: Cohausz Hannig Borkowski Wißgott

(56) Entgegenhaltungen:
- EP-A2- 0 911 775
- EP-A2- 1 282 094
- EP-A2- 1 392 078
- WO-A1-00/21053
- US-A1- 2007 066 311
- US-A1- 2007 076 650

## Beschreibung

Die Erfindung betrifft ein Verfahren zur bidirektionalen Funkkommunikation zwischen zwei Kommunikationsteilnehmern, bei dem ein Kommunikationsteilnehmer ein kommunikationseinleitendes Synchronisationstelegramm aussendet, welches von dem anderen Kommunikationsteilnehmer empfangen wird, wonach der das Synchronisationstelegramm sendende Kommunikationsteilnehmer wenigstens ein zeitliches Empfangsfenster öffnet, um eine Antwort des das Synchronisationstelegramm empfangenden Kommunikationsteilnehmers zu erhalten, wobei nach Erhalt einer Antwort eine wenigstens unidirektionale Kommunikation zwischen den Kommunikationsteilnehmern stattfindet.

Die Erfindung betrifft weiterhin auch ein System zur Durchführung eines solchen Verfahrens gemäß dem Oberbegriff des Anspruchs 11.

Ein solches Verfahren und System ist aus dem Dokument EP 0 911 775 A2 bekannt. Dokument US 2007/066311 A1 offenbart, in einem Telegramm den zur Bestätigung des Empfangs des Telegramms zu verwendenden Kanal anzuzeigen.

Im Stand der Technik ist es allgemein bekannt, dass Kommunikationsteilnehmer funkgebunden miteinander kommunizieren, was sowohl unidirektional als auch bidirektional vorgesehen sein kann. Die Kommunikationsteilnehmer können dabei jegliche Geräte sein, die miteinander kommunizieren können, insbesondere Geräte der Haus- und Liegenschaftstechnik, die üblicherweise miteinander kommunizieren, um Daten zumindest unidirektional, ggfs. auch bidirektional auszutauschen.

Beispielsweise können solche Kommunikationsteilnehmer als Netzknoten eines Sensornetzwerks eingesetzt werden, z.B. um Energieverbräuche zu messen oder Gefahren festzustellen und hierüber Daten an andere Netzknoten oder einen zentralen Netzknoten zu übersenden. Dabei ist es neben einer Organisation als Sensornetzwerk auch bekannt in einer Liegenschaft mehrere solcher genannten Kommunikationsteilnehmer als Funksensoren einzusetzen, die nicht miteinander vernetzt sind, jedoch jeweils mit einem zentralen Datensammelgerät als Kommunikationsteilnehmer kommunizieren, um die gesammelten Daten an diesen Kommunikationsteilnehmer zu übermitteln. Ein solcher als Datensammelgerät ausgebildeter Kommunikationsteilnehmer kann z.B. nicht-stationär betrieben und zwecks einer Auslesung der gesammelten Daten durch eine Liegenschaft getragen werden.

Derartige als vernetzte oder auch unvernetzte Funksensoren bzw. als Datensammelgeräte ausgebildete Kommunikationsteilnehmer werden bevorzugt im Rahmen der Erfindung eingesetzt, beschränken die Erfindung jedoch nicht auf diesen Anwendungsfall.

Kommunikationsteilnehmer dieser genannten Art umfassen dabei üblicherweise eine eigene Energiequelle, z.B. Batterie oder Akku, um die Sende- und Empfangstätigkeiten durchzuführen sowie auch eine interne Uhr, wobei bevorzugt die Uhren aller Kommunikationsteilnehmer untereinander synchronisiert sind bzw. bei der Kommunikation von jeweils zwei Kommunikationsteilnehmern untereinander immer wieder neu synchronisiert werden.

Zur Einsparung der Energieressourcen, die in einem Kommunikationsteilnehmer nur beschränkt vorhanden sind, ist es weiterhin bekannt, dass die Kommunikationsteilnehmer, die miteinander kommunizieren wollen, nicht konstant auf Empfang stehen, um Datenmitteilungen anderer Kommunikationsteilnehmer empfangen zu können, da die internen Energiereserven eines Kommunikationsteilnehmers einen solchen Dauerempfang nicht lang genug aufrechterhalten könnten.

Es ist daher vorgesehen, dass die einzelnen Kommunikationsteilnehmer, z.B. solche genannten Funksensoren in einer Liegenschaft, zu vorbestimmten Zeiten, insbesondere die sich aus den internen Uhren eines jeweiligen Kommunikationsteilnehmers ergeben, ein Empfangsfenster öffnen, um innerhalb dieses begrenzten Zeitraumes festzustellen, ob dieser betreffende Kommunikationsteilnehmer durch einen anderen Kommunikationsteilnehmer zwecks Kontaktaufnahme mittels eines sogenannten Synchronisationstelegramms angefunkt wird.

Ein Synchronisationstelegramm im Sinne der Erfindung ist dabei eine auf die notwendigsten Informationen beschränkte Funkaussendung, ohne die eigentlichen zu übertragenden Daten zu umfassen und wirkt kommunikationseinleitend für eine folgende Datenkommunikation in dem Sinn, dass beide Kommunikationsteilnehmer durch Aussendung und Empfang eines solchen Synchronisationstelegramms Ihre notwendige Synchronität feststellen oder zumindest hierdurch erzeugen, um anhand eines festgelegten Sende- und Empfangsprotokolls die Daten auszutauschen zu können.

Um dies durchzuführen, ist es vorgesehen, dass zur Einleitung einer insbesondere bidirektionalen Kommunikation ein Kommunikationsteilnehmer ein solches kommunikationseinleitendes Synchronisationstelegramm aussendet. Ein solches Synchronisationstelegramm kann innerhalb des vorangehend genannten Empfangsfensters von wenigstens einem anderen Kommunikationsteilnehmer empfangen werden und beantwortet werden.

Durch Versendung und Empfang ein solchen Synchronisationstelegramms kann demnach herausgefunden werden, ob zwei Kommunikationsteilnehmer aneinander ausreichend synchronisiert sind oder sodann nach Empfang eine Synchronisierung zu erzielen, um eine weitere Kommunikation einzuleiten. Dabei ist es vorgesehen, dass derjenige Kommunikationsteilnehmer, der das kommunikationseinleitende Synchronisationstelegramm ausgesendet hat, unmittelbar im Anschluss daran ein zeitliches Empfangsfenster öffnet, also eine intern vorgesehene Empfangseinheit für eine vorbestimmte Zeit auf Empfang schaltet, um innerhalb dieses zeitlichen Empfangsfensters seinerseits zu horchen, ob er eine Antwort eines anderen Kommunikationsteilnehmers empfängt, der das Synchronisationstelegramm empfangen konnte.

Sofern dies stattfindet, können sich die beiden Kommunikationsteilnehmer aneinander synchronisieren und einen weiteren bidirektionalen Datenaustausch vornehmen. Hierfür können interne so genannte "state-machines" aneinander angepasst bzw. synchronisiert werden, mittels denen der weitere Datenaustausch anhand eines festgelegten Protokolls durchgeführt wird. Es können so auch die internen Uhren der Kommunikationsteilnehmer aneinander synchronisiert werden, um die jeweiligen Kommunikationsteilnehmer für zukünftige Kommunikationen vorzubereiten.

Anordnungen von mehreren solcher Kommunikationsteilnehmer, z.B. Sensornetzwerke oder auch nicht vernetzte Funksensoren der eingangs genannten gattungsgemäßen Art können verschiedenste Arten von Kommunikationsteilnehmern umfassen. Beispielsweise sind Sensornetzwerke im Bereich der Haustechnik bekannt, insbesondere in den Einsatzgebieten, in denen Verbrauchswerte von Verbrauchern in Liegenschaften erfasst und an einen Dienstleister zur Abrechnung der Verbräuche übermittelt werden sollen.

Beispielsweise können Heizkosten durch solche Kommunikationsteilnehmer eines Sensornetzwerkes, die auch als Netzknoten bezeichnet werden, oder durch unvernetzte Funksensoren erfasst werden. Derartige Kommunikationsteilnehmer werden beispielsweise auch als elektronische Heizkostenverteiler bezeichnet. Diese elektronischen Heizkostenverteiler sind in der Lage, den Heizenergieverbrauch in Liegenschaften zu ermitteln und zu speichern und beispielsweise zu vorgegebenen Stichtagen oder auch dazwischen an zentrale Datensammler zu übersenden, die stationär in einer Liegenschaft vorhanden sein können oder zu bestimmten Zeiten zwecks Ablesung durch eine Liegenschaft getragen werden.

Solche Kommunikationsteilnehmer sind auch auf anderen Gebieten bekannt, wie beispielsweise auf dem Gebiet der Gefahrenmelder, die ebenso Kommunikationsteilnehmer gemäß der Erfindung darstellen können und untereinander kommunizieren, um erfasste Gefahren an eine Meldezentrale weiterzuleiten. Beispielsweise sind Brand- bzw. Rauchmelder oder auch Einbruchmelder als solche Kommunikationsteilnehmer bekannt.

Ebenso besteht die Möglichkeit, innerhalb einer Anordnung einer Art von Funksensoren als Kommunikationsteilnehmer noch andere Arten von Funksensoren zu installieren. Allgemein weisen Funksensoren als bevorzugte Kommunikationsteilnehmer im Sinne der Erfindung jeweils einen Sensor oder ein System zu einer Messwerterfassung sowie Sende- und Empfangseinheiten und eine Energiequelle auf.

Bei den eingangs genannten Anordnungen von Kommunikationsteilnehmern (z.B. vernetzte oder nicht vernetzte Funksensoren in Liegenschaften) ist es als Problem allgemein bekannt, dass sich die Bedingungen einer Funkkommunikation, beispielsweise innerhalb von bebauten Gebieten, insbesondere Gebäuden, z.B. durch bauliche Änderungen oder auch durch den Betrieb weiterer Geräte und Systeme im Laufe der Zeit erheblich ändern können. Dies kann insbesondere Betriebsbedingungen innerhalb eines bestimmten Funkfrequenzbereiches, eines sogenannten Funkbandes oder Funkkanales, betreffen.

So ergibt sich bei schwankenden Funkbedingungen die Problematik, dass ein ausgesandtes Synchronisationstelegramm von einem Kommunikationsteilnehmer, der eigentlich zum Empfang zeitlich vorgesehen ist und der auch zeitlich korrekt sein Empfangsfenster öffnet, aufgrund zu schlechter Betriebsbedingungen nicht empfangbar ist oder aber wenn ein Synchronisationstelegramm von einem angesprochenen Kommunikationsteilnehmer empfangen werden kann, dessen Antwort hierauf von dem das Synchronisationstelegramm aussendenden Kommunikationsteilnehmer nicht in ausreichendem Maße empfangen werden kann. Allgemein kann es also vorkommen, dass eine Funkkommunikation, selbst wenn diese ursprünglich noch erfolgreich eingeleitet werden konnte, nicht vollständig durchgeführt und abgebrochen wird. Dies führt zu einem Verbrauch von Energieressourcen, ohne dass erfolgreich die notwendige Datenkommunikation stattfinden konnte.

Die Aufgabe der Erfindung ist es, diese Nachteile bekannter System zu überwinden und ein Verfahren und ein System bereitzustellen, mit denen eine sichere Funkkommunikation zwischen den Kommunikationsteilnehmern selbst bei schwankenden Funkbedingungen innerhalb eines oder mehrerer Funkkanäle durchgeführt werden kann.

Erfindungsgemäß wird die Aufgabe durch ein gattungsgemäßes, eingangs genanntes Verfahren gelöst, bei dem im Synchronisationstelegramm eine Information übermittelt wird über einen Empfangskanal, in welchem der das Synchronisationstelegramm sendende Kommunikationsteilnehmer die Antwort erwartet, wobei der Empfangskanal festgelegt wird aus einer Gruppe möglicher Empfangskanäle, die hinsichtlich eines Qualitätsmaßes vom sendenden Kommunikationsteilnehmer überprüft werden, wobei für jeden Empfangskanal separat mindestens ein Qualitätsmaß als ein Zahlenwert in einem Register gespeichert wird und für die folgende Kommunikation derjenige Kanal festgelegt wird, für den das höchste Qualitätsmaß hinterlegt ist und nach der Aktualisierung des Qualitätsmaßes eines Kanals eine Erhöhung des gespeicherten Qualitätsmaßes zumindest der übrigen Kanäle erfolgt.

Die Aufgabe wird weiterhin gelöst durch ein System der eingangs genannten gattungsgemäßen Art, das eingerichtet ist, im Synchronisationstelegramm eine Information zu übermitteln über einen Empfangskanal, in welchem der das Synchronisationstelegramm sendende Kommunikationsteilnehmer die Antwort erwartet, wobei der Empfangskanal festgelegt ist aus einer Gruppe möglicher Empfangskanäle, die hinsichtlich eines Qualitätsmaßes vom sendenden Kommunikationsteilnehmer überprüft sind, und es zusätzlich eingerichtet ist, für jeden Empfangskanal separat mindestens ein Qualitätsmaß als ein Zahlenwert in einem Register zu speichern, für die folgende Kommunikation denjenigen Kanal festzulegen, für den das höchste Qualitätsmaß hinterlegt ist, und nach der Aktualisierung des Qualitätsmaßes eines Kanals eine Erhöhung des gespeicherten Qualitätsmaßes zumindest der übrigen Kanäle vorzunehmen.

Das erfindungsgemäße Verfahren hat demnach den Vorteil, dass eine Funkkommunikation zwischen zwei Kommunikationsteilnehmern, wie beispielsweise Heizkostenverteilern oder auch Gefahrenmeldern, wie z.B. Brand- oder Rauchmeldern, untereinander oder mit stationären oder mobilen Datensammelgeräten nicht mehr nur auf einer bestimmten festgelegten Frequenz oder einem festen Funkkanal durchgeführt werden kann, sondern dass hier vielmehr mit dem erfindungsgemäßen Verfahren und System die Möglichkeit besteht, die Kommunikation auf mehreren Funkkanälen insbesondere abwechselnd durchzuführen, wobei jeweils anhand eines Qualitätskriteriums entschieden werden kann, welcher Funkkanal für die Antwort eines Kommunikationsteilnehmers auf ein empfangendes Synchronisationstelegramm und insbesondere auch für die darauf erfolgende Datenkommunikation verwendet wird.

Hierbei kann es vorgesehen sein, dass entweder die Aussendung eines Synchronisationstelegramms immer auf demselben Kanal erfolgt und mitgeteilt wird, auf welchem ausgewählten Kanal die Antwort und ggfs. die weitere Kommunikation, insbesondere ein Datenaustausch durchgeführt werden soll oder es kann in einer Alternative auch vorgesehen sein, dass die Aussendung eines Synchronisationstelegramms immer auf dem Funkkanal durchgeführt wird, der noch aus der vorherigen Kommunikation bestimmt ist, wobei mit dem Synchronisationstelegramm der Funkkanal an den empfangenden Kommunikationsteilnehmer übermittelt wird, auf dem die Antwort auf das Synchronisationstelegramm und insbesondere die nachfolgende Kommunikation stattfinden soll.

In anderer Alternative kann es auch vorgesehen sein, dass ein Kommunikationsteilnehmer ein Synchronisationstelegramm mit einer Information über den zu verwendenden Funkkanal bereits auf diesem Funkkanal sendet und die zum Empfang bereitstehenden Kommunikationsteilnehmer auf allen möglichen Funkkanälen den Empfang eines solchen Synchronisationstelegramm erwarten (auf Empfang stehen) und dann nur auf dem festgelegten Funkanal antworten und weiter kommunizieren.

Bei dem erfindungsgemäßen Verfahren kann es in einer Weiterbildung auch vorgesehen sein, dass auch in der Antwort desjenigen Kommunikationsteilnehmers, der das Synchronisationstelegramm empfangen hat eine Information übermittelt wird über einen für die folgende Rückantwort, insbesondere den dann stattfindenden Datenaustausch zu verwendenden Empfangskanal. Es kann sich dabei bevorzugt um einen Kanal aus derselben Gruppe handeln. Insgesamt kann es dabei vorgesehen sein, dass ein zu verwendender Kanal auf dieselbe Art und Weise festgelegt wird.

Bei dem Verfahren und dem System kann es weiterhin vorgesehen sein, dass die Überprüfung eines Qualitätsmaßes der jeweils zur Verfügung stehenden Empfangskanäle bevorzugt in regelmäßigen Abständen stattfindet, um zeitnah auf sich ändernde Funkbedingungen in den einzelnen Kanälen reagieren zu können. Dabei kann es insbesondere vorgesehen sein, dass eine Überprüfung in regelmäßigen Abständen dadurch erfolgt, dass diese Überprüfung dann vorgenommen wird, wenn die Aussendung eines Synchronisationstelegramms von einem Kommunikationsteilnehmer durchgeführt wird bzw. unmittelbar vorher oder nachher.

So besteht hier die Möglichkeit, dass ein Kommunikationsteilnehmer vor der Aussendung eines Synchronisationstelegramms ein Qualitätsmaß eines Kanals prüft (z.B. durch bloßes Hineinhorchen in den Funkkanal) oder das Qualitätsmaß nach einer Aussendung eines Synchronisationstelegramms und/oder nach einer erhaltenen Antwort eines Netzknotens und/oder nach einer insgesamt durchgeführten Datenkommunikation zwischen zwei Kommunikationsteilnehmern ermittelt, insbesondere wobei das so ermittelte Qualitätsmaß eingesetzt wird, um den Kanal für eine spätere, insbesondere die nächste nachfolgende Kommunikation zu bestimmen. Beispielsweise kann sich das Qualitätsmaß so unmittelbar aus der zurückliegenden Datenkommunikation ergeben.

Hierbei kann es in bevorzugter Ausführung vorgesehen sein, dass als Qualitätsmaß ein Messwert herangezogen wird, der von einem Kommunikationsteilnehmer wie genannt vor, während oder nach einer Kommunikation erfasst werden kann. Beispielsweise kann es sich bei einem Messwert um einen solchen handeln, der die gemessene Feldstärke oder Leistung auf einem Kanal repräsentiert. Beispielsweise kann hierbei ein Qualitätsmaß als hoch bezeichnet werden, wenn der Messwert eine niedrige Leistung oder eine niedrige Feldstärke anzeigt.

Bezugnehmend auf die vorherigen Ausführungen kann dabei bevorzugt der Messwert gemessen werden in einem Empfangsfenster eines Kommunikationsteilnehmers, wenn innerhalb dieses Empfangsfensters keine Nachricht des anderen Kommunikationsteilnehmers empfangen wird. Bei dieser Nachricht kann es sich um die eingangs genannte Antwort, Rückantwort oder auch daraufhin folgende Antworten handeln.

Erfindungsgemäß kann es bei allen Ausführungen vorgesehen sein, dass ein Qualitätsmaß insgesamt für jeden der Empfangskanäle bestimmt werden kann, die für den Empfang einer Antwort und/oder Rückantwort und/oder folgender Antworten eines Kommunikationsteilnehmers vorgesehen sind. Dies kann z.B. sukzessive erfolgen jeweils in Verbindung mit einer Aussendung eines Synchronisationstelegramms bzw. der Durchführung einer Kommunikation. Es handelt sich bei den Kanälen gleichzeitig auch um diejenigen Empfangskanäle, über die sodann nach einer Antwort eines Netzknotens auch die folgende Datenkommunikation durchgeführt werden würde, sofern nicht während der Kommunikation der Wechsel auf einen anderen Kanal - wie eingangs genannt - festgelegt wird.

Es kann dabei vorgesehen sein, dass das Qualitätsmaß, welches für jeden der möglichen Kanäle, also insgesamt eine Gruppe von vorher festgelegten Kanälen gegeben ist, überprüft wird und für die folgende Kommunikation oder zumindest Teile der Gesamtkommunikation derjenige Kanal festgelegt wird, für den das höchste Qualitätsmaß gegeben ist. So wird sichergestellt, dass insbesondere nach der Bestimmung eines Qualitätsmaßes die nachfolgende Kommunikation in demjenigen Kanal durchgeführt wird, der sich aufgrund der vorherigen Messung des Qualitätsmaßes als der beste erweist. Insbesondere wenn eine gesamte Kommunikation paketbasiert durchgeführt wird und die gesamten Daten als Teilpakete in einer Kommunikation mit Sende- und Empfangsfenstern durchgeführt wird, kann es auch vorkommen, dass zwischen der Versendung aufeinander folgender Pakete ein Kanal, insbesondere gemäß den vorgenannten Kriterien gewechselt wird.

So kann es allgemein auch vorgesehen sein, dass beide Kommunikationsteilnehmer verschiedene Empfangskanäle verwenden, insbesondere die sie sich jeweils in einer vorherigen Funkübertragung mitgeteilt haben. Dabei kann es auch sein, dass jeder der Kommunikationsteilnehmer aus einer eigenen Gruppe von möglichen Kanälen auswählt, es also insbesondere wenigstens zwei Gruppen von Kanälen gibt.

Die folgende Kommunikation betrifft dabei diejenige Kommunikation, die nach der Aussendung und der Bestätigung des Empfangs eines Synchronisationstelegramms durchgeführt wird, um die Daten zwischen den beiden betreffenden Netzknoten zu versenden. Bei der genannten folgenden Kommunikation kann es sich auch um diejenige handeln, bei der nach der Auswahl des Kanals mit dem besten Qualitätsmaß wiederum ein Synchronisationstelegramm ausgesendet wird, um eine Kommunikation für einen Datenaustausch einzuleiten.

Erfindungsgemäß kann es vorgesehen sein, dass jeweils das Qualitätsmaß für den Vergleich der einzelnen Kanäle herangezogen wird, welches sich aus der letzten zurückliegenden Messung des genannten Messwertes ergibt. Dies kann jedoch dazu führen, dass gegebenenfalls sehr kurzfristige Schwankungen in der Qualität eines Kanals überbewertet werden und zu nicht zufrieden stellenden Empfangsbedingungen bei der dann durchgeführten Kommunikation führen, so dass es in einer erfindungsgemäß bevorzugten Ausführungsvariante vorgesehen sein kann, dass ein Qualitätsmaß für einen Kanal nicht nur aus dem aktuellen Messwert gebildet wird, sondern aus mehreren vorangegangenen Messwerten.

Dabei kann es vorgesehen sein, dass ein aktueller Messwert in die Bildung eines Qualitätsmaßes mit eingeht oder aber nur die vorangegangenen Messwerte berücksichtigt werden.

Beispielsweise kann dies erfolgen durch die Anwendung eines Filters, insbesondere eines Tiefpassfilters. Auch hier kann es sodann vorgesehen sein, dass ein Qualitätsmaß als hoch bezeichnet wird, wenn der Messwert bzw. der aus den vorangegangenen Messwerten gebildete Filterwert eine niedrige Leistung oder Feldstärke anzeigt.

Beispielsweise kann es vorgesehen sein, aus den zurückliegenden Messwerten, gegebenenfalls in Verbindung mit dem aktuellen Messwert, einen gemittelten Messwert zu berechnen, der ein neues Qualitätsmaß für die Bestimmung eines Empfangskanals bildet. Dies kann in einer Ausführung beispielsweise derart erfolgen, dass erhaltene Messwerte eines Kanals jeweils in einen Stapelspeicher eingefügt werden, so dass innerhalb dieses Stapelspeichers die Historie von Messwerten, zumindest einer bestimmten Anzahl von zurückliegenden Messwerten vorliegt.

Es kann sodann vorgesehen sein, dass ein gemittelter Messwert aus einer vorbestimmten Anzahl zurückliegender, insbesondere in einem solchen Stapelspeicher gespeicherter Messwerte gebildet wird. Hierfür kann beispielsweise die Tiefe des Stapelspeichers der Anzahl der zu berücksichtigenden historisch zurückliegenden Messwerten entsprechen. Eine solche Durchführung des Verfahrens, bei der auch zurückliegende Messwerte berücksichtigt werden, hat den besonderen Vorteil, dass kurzfristige Schwankungen der Qualität eines Kanals nicht überbewertet werden, ggfs. sogar unberücksichtigt bleiben und eine längerfristige Tendenz der Entwicklung eines Kanals Berücksichtigung findet.

Erfindungsgemäß ist es beim Verfahren bzw. dem System vorgesehen, dass für jeden Empfangskanal mindestens ein Qualitätsmaß gespeichert wird. Hierfür ist für jeden Funkkanal separat ein Register vorgesehen, in welchem ein Zahlenwert gespeichert wird, der das Qualitätsmaß des jeweiligen Funkkanals repräsentiert.

Es kann sich hierbei bei dem Qualitätsmaß, welches zur Speicherung berücksichtigt wird, entsprechend den vorgenannten Ausführungen entweder um das Qualitätsmaß entsprechend eines Messwertes der letzten Messung handeln oder aber um ein Qualitätsmaß, das unter Berücksichtigung mehrerer historischer zurückliegender Messwerte durch Anwendung eines Filters wie eingangs genannt gebildet wurde.

Es liegt sodann systemintern mit jedem Register für jeden Kanal ein Speicher vor, der für die Festlegung des nächsten Kanals berücksichtigt bzw. abgefragt werden kann. Hierbei ist es insbesondere vorgesehen, dass der Zahlenwert in einem Register ein hohes Qualitätsmaß wiedergibt, wenn der Zahlenwert hoch ist. Z.B. können sich Qualitätsmaß und Zahlenwert reziprok zueinander verhalten, bzw. so der eine Wert aus dem anderen gebildet werden.

Es ist hier also zu unterscheiden zwischen dem eingangs genannten Messwert, der beispielsweise gering sein kann bei einer hohen Qualität und dem abzuspeichernden Zahlenwert in dem Register, der bevorzugt hoch ist, wenn sich aufgrund des oder der zurückliegenden Messwerte ein hohes Qualitätsmaß für einen Kanal ergibt. Auch die umgekehrte Alternative ist möglich.

Erfindungsgemäß ist es vorgesehen, dass für eine folgende Kommunikation derjenige Kanal festgelegt wird, für den das höchste Qualitätsmaß und somit insbesondere der höchste Zahlenwert in einem Register gespeichert ist. So kann demnach der festzulegende Kanal bestimmt werden unmittelbar aus einem Vergleich der jeweiligen gespeicherten Zahlenwerte des Registers, dass den einzelnen Kanälen zugewiesen ist.

Ein derartiges Verfahren kann sich jedoch insoweit als nachteilig erweisen, dass beispielsweise immer ein bestimmter Kanal bevorzugt wird, wenn sich ergibt, dass dieser Kanal ein hohes Qualitätsmaß bei einer vorherigen Überprüfung aufweist und somit den aktuell höchsten Zahlenwert im Register widerspiegelt. Eine ausschließliche Berücksichtigung des jeweils höchsten Registerstandes kann demnach zu einer singulären Bevorzugung dieses Kanals führen, ohne dass die übrigen Kanäle für folgende Kommunikationen eine Berücksichtigung finden würden.

Erfindungsgemäß ist daher bei der Ausführung des Verfahrens und des Systems vorgesehen, dass nach der Aktualisierung des Qualitätsmaßes eines Kanals und somit auch der Speicherung eines aktualisierten Zahlenwertes in dem entsprechenden Register dieses Kanals eine Erhöhung des gespeicherten Qualitätsmaßes, zumindest der übrigen Kanäle und somit eine Erhöhung der Zahlenwerte in den Registern zumindest der übrigen Kanäle erfolgt. Aktualisiert wird das Qualitätsmaß dabei durch Erfassung des eingangs genannten Messwertes in der eingangs beschriebenen Möglichkeit, ggfs. auch mit der Anwendung des Filters.

Gegebenenfalls kann es hier in einer Weiterbildung auch vorgesehen sein, dass eine Erhöhung des Qualitätsmaßes nicht nur bei den übrigen Kanälen erfolgt, sondern auch bei dem aktuell hinsichtlich des Qualitätsmaßes überprüften Kanals. Eine solche künstliche Erhöhung des Qualitätsmaßes kann beispielsweise immer durchgeführt werden, wenn zu einem der Kanäle aus der Gruppe aller Kanäle unmittelbar zuvor ein Qualitätsmaß bestimmt wurde. Es ergibt sich so die Möglichkeit, dass durch die künstliche Erhöhung eines abgespeicherten Qualitätsmaßes und somit eines Registerzahlenwertes auch bislang nicht berücksichtigte Kanäle einen Registerzahlenwert, ggfs auch erst nach mehreren Erhöhungen erhalten, der dazu führt, dass nicht immer derselbe Kanal derjenige mit dem höchsten gespeicherten Qualitätsmaß bleibt, sondern auch die übrigen Kanäle durch die künstliche Erhöhung ein besseres Qualitätsmaß erhalten können.

Die Erhöhung des Qualitätsmaßes kann z.B. durch eine Inkrementierung des Zahlenwertes im Register erfolgen oder alternativ durch jegliche Art von Operation, die zu einer Erhöhung führt.

Dabei kann es grundsätzlich vorgesehen sein, dass die Dimension einer Erhöhung des Qualitätsmaßes für alle Kanäle gleich oder unterschiedlich hoch ist, je nachdem welche weiteren Kriterien für das erfindungsgemäße Verfahren und System relevant sind. Beispielsweise kann es vorgesehen sein, dass die Dimension der Erhöhung des Qualitätsmaßes für verschiedene Kanäle unterschiedlich hoch ist, was dazu führen kann, dass die Benutzungshäufigkeit der Kanäle steuerbar ist.

Ebenso kann es vorgesehen sein, dass die Dimension der Erhöhung des Qualitätsmaßes aller Kanäle von der Häufigkeit der Änderung der Kanalbelegung abhängt, um einen häufigen Kanalwechsel zu vermeiden. Diese Möglichkeiten können auch kombiniert werden.

Alternativ zu der beschrieben Verfahrensvariante der Bestimmung eines Messwertes, daraus der Qualität und der Speicherung der Qualität als Zahlenwert sowie der künstlichen Erhöhung der Qualität kann eine inverse Verfahrenvariante durchgeführt werden, wobei die zuvor genannten Vorzeichen bzw. Beurteilungen negiert sind. Dies führt zu einer äquivalenten Verfahrensdurchführung.

In einer Weiterbildung des erfindungsgemäßen Verfahrens und Systems kann es vorgesehen sein, dass bei Unterschreiten eines bestimmten Qualitätsmaßes in einem Kanal unmittelbar nach der Bestimmung des Qualitätsmaßes ein erneutes Synchronisationstelegramm ausgesendet wird, in welchem ein neuer Kanal festgelegt wird. So kann es beispielsweise passieren, dass aus der Gruppe sämtlicher Kanäle derjenige Kanal anhand des gespeicherten Qualitätsmaßes herausgesucht wird, der für die folgende Kommunikation zu verwenden ist.

Wird ein Synchronisationstelegramm von einem Netzknoten ausgesendet und hierbei festgestellt, dass das Qualitätsmaß, welches unmittelbar im Zusammenhang mit der Aussendung eines Synchronisationstelegramms ermittelt wird, unterhalb einer vorgegebenen Schwelle liegt, so zeigt sich, dass dieser bestimmte Kanal für die Durchführung der Kommunikation ungeeignet ist. Es kann sodann vorgesehen sein, dass anhand der gespeicherten Qualitätsmaße in den Registern für die Aussendung eines folgenden Synchronisationstelegramms der nächstbeste Kanal ausgewählt wird, insbesondere ohne vorher das Register zu aktualisieren.

Ebenso kann es vorgesehen sein, zunächst das Register anhand des zuvor bestimmten, nicht ausreichenden Qualitätsmaßes zu aktualisieren und sodann anhand des aktuellen Registers einen neuen Kanal festzulegen anhand des höchsten in dem Register gespeicherten Qualitätsmaßes.

Da es passieren kann, dass selbst nach mehrmaligen Versuchen in einem Kanal oder gegebenenfalls bei den mehreren Versuchen in jeweils geänderten Kanälen sich jeweils unzureichende Kommunikationsbedingungen ergeben, kann in einer weiteren Ausführung die Aussendung von Synchronisationstelegrammen nach n Versuchen abgebrochen werden, wobei n eine natürliche Zahl darstellt, bevorzugt innerhalb eines Bereiches von n größer 1 und n kleiner 1000.

Für die Festlegung eines Kanals kann innerhalb des vorgenannten Verfahrens eine Entscheidungslogik oder ein Entscheidungsalgorithmus, insbesondere eine Programmschleife, innerhalb einer Software zur Durchführung des Verfahrens verwendet werden. Eine solche Software kann innerhalb eines jeden der Kommunikationsteilnehmer integriert sein und ablauffähig sein, wofür ein solcher Kommunikationsteilnehmer eine entsprechende Mikroprozessorlogik aufweisen kann. Dabei kann es weiterhin vorgesehen sein, dass jedes der Kommunikationsgeräte mehrere Register zur Speicherung der Qualitäten der möglichen Kanäle aufweist, insbesondere jeweils ein Register für jedes der anderen Kommunikationsgeräte, mit denen das betreffende Kommunikationsgeräte einen Datenaustausch durchführen kann. So kann in einem Kommunikationsgerät für jede mögliche Kommunikationsgerätepaarung jeweils ein Register vorhanden sein, in welchem die Qualitäten zu n möglichen Kanälen gespeichert sind.

Insgesamt betrachtet hat das erfindungsgemäße Verfahren den besonderen Vorteil, dass eine Kommunikation nicht wie z.B. bei den bekannten Sensornetzwerken oder unvernetzten Funksensoren immer bei ein- und demselben Funkkanal erfolgt, wodurch gegebenenfalls erhebliche Störungen auftreten können, sondern dass wie eingangs verfahrensmäßig beschrieben die Qualität von mehreren, aus wenigstens einer Gruppe vorgegebener Kanäle bestimmt wird und somit aus dieser wenigstens einen Gruppe der Kanäle anhand mehrerer möglicher Entscheidungskriterien der für die folgende Kommunikation beste Kanal ermittelt wird.

Somit erweist sich das erfindungsgemäße Verfahren als flexibler gegenüber den im Stand der Technik bekannten Verfahren und weniger anfällig gegenüber äußeren Störungen, insbesondere solcher Störungen, die sich durch geänderte Funkbedingungen ergeben können.

Ein Ausführungsbeispiel der Erfindung ist in dem nachfolgenden Beispiel näher erläutert. Es zeigen:
- Figur 1:: eine Übersichtsdarstellung von beispielhaft 2 Kommunikationsgeräten mit einem Register zur Speicherung der Qualitäten der möglichen Kanäle
- Figur 2:: die exemplarische Entwicklung der Registerzählerstände und die danach erfolgte Auswahl eines Kanals

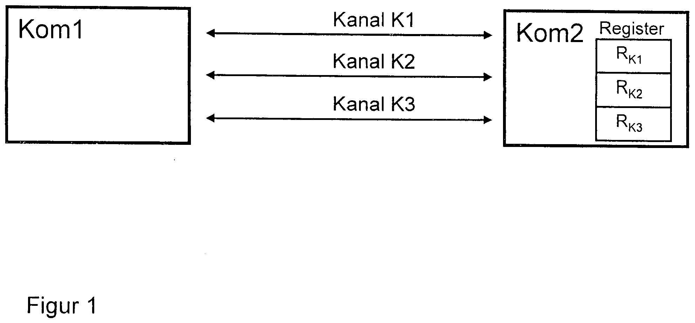

Die Figur 1 zeigt exemplarisch die Kommunikation zwischen zwei Kommunikationsgeräten Kom1 und Kom2 zur Erläuterung des Systems und des Verfahrens. Ein System wird tatsächlich mehr Kommunikationsgeräte aufweisen, diese sind hier jedoch aus Gründen der Übersichtlichkeit nicht dargestellt.

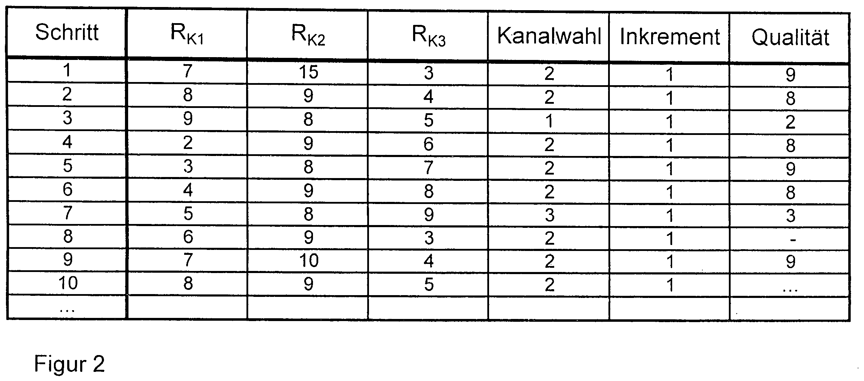

Für die Kommunikation weist das Gerät Kom2 ein Register auf, in welchem die Qualitäten zu den 3 möglichen Kanälen K1, K2, K3 gespeichert sind, die für die Kommunikation zwischen Kom1 und Kom2 verwendet werden können. Ein Register im Gerät Kom1 ist nicht dargestellt, kann jedoch vorhanden sein. Die Figur 2 zeigt schrittweise die Durchführung des Verfahrens und die Entwicklung des Registerstands.

Dargestellt sind hier zur Veranschaulichung 10 Schritte des ansonsten kontinuierlich ablaufenden Verfahrens. Gespeichert sind in dem Register des Geräts Kom2 für jeden der 3 möglichen Kanäle K1, K2 und K3 die Qualitäten als Registerzahlenwerte R_{K1}, R_{K2} und R_{K3}.

Im Schritt 1 weist das Register für den Kanal 2 mit einem Registerzahlenwert von R_{K2}=15 die höchste Qualität unter den drei Kanälen auf. D.h. dass für die folgende Kommunikation der Kanal K2 ausgewählt wird. Weiterhin wird der bevorzugten zuvor beschriebenen Ausführung folgend der Registerzahlenwert der übrigen beiden Kanäle um das Inkrement 1 erhöht und die bei der Kommunikation oder bei der Sendung des Synchronisationstelegramm ermittelte neue Qualität des Kanals K2 in dessen Register gespeichert. Diese Qualitätszahl entspricht hier 9 und wird für den zweiten Schritt übernommen.

Im zweiten Schritt weist der Kanal K2 weiterhin die höchste Qualität auf und wird ausgewählt. Inkrementation und Neufeststellung der Qualität erfolgt wie zuvor, wobei die jetzt festgestellte Qualität mit der Zahl R_{K2} = 8 kleiner ist als die Qualitätszahl R_{K1} die durch die Inkrementation zwischenzeitlich 2 mal erhöht wurde.

Aus diesem Grund wird im Schritt 3 der Kanal K1 für die Kommunikation ausgewählt und im Synchronisationstelegramm an das andere Kommunikationsgerät mitgeteilt. Bei der Feststellung der Qualität zeigt sich dann, dass dieser benutzte Kanal K1 nur eine tatsächliche Qualität von 2 aufweist, so dass der Registerwert zurücksetzt wird auf diese Zahl.

Im Schritt 4 wird sodann nach der vorherigen Inkrementation wieder Kanal K2 ausgewählt usw.

Durch die mit jedem Schritt erfolgt Inkrementation erhält mit Schritt 7 der Kanal K3 den höchsten Registerstand und wird ausgewählt. Die nach der Auswahl festgestellte Qualität beträgt jedoch nur R_{K3} = 3 und wird für den achten Schritt gespeichert, wobei sich in den Schritten 8 bis 10 jeweils Kanal K2 als bester und auszuwählender Kanal erweist.

So zeigt sich mit diesem Verfahren, dass zwar der Kanal K2 objektiv derjenige mit der besten Qualität über den Zeitraum der 10 Schritte ist, dass jedoch durch die Inkrementation vermieden wird, dass nur dieser Kanal K2 bevorzugt wird und zumindest in Abständen auch die übrigen Kanäle überprüft werden, da diese durch die Inkrementation einen Registerstand erreichen, der zu einer Auswahl führt.

Bezüglich sämtlicher Ausführungen ist festzustellen, dass die in Verbindung mit einer Ausführung genannten technischen Merkmale nicht nur bei der spezifischen Ausführung eingesetzt werden können, sondern auch bei den jeweils anderen Ausführungen. Sämtliche offenbarten technischen Merkmale dieser Erfindungsbeschreibung sind als erfindungswesentlich einzustufen und beliebig miteinander kombinierbar oder in Alleinstellung einsetzbar.

## Patentansprüche

1. Verfahren zur bidirektionalen Funkkommunikation zwischen zwei Kommunikationsteilnehmern (Kom1, Kom2), bei dem ein Kommunikationsteilnehmer (Kom1) ein kommunikationseinleitendes Synchronisationstelegramm aussendet, welches von dem anderen Kommunikationsteilnehmer (Kom2) empfangen wird, wonach der das Synchronisationstelegramm sendende Kommunikationsteilnehmer (Kom1) wenigstens ein zeitliches Empfangsfenster öffnet, um eine Antwort des das Synchronisationstelegramm empfangenden Kommunikationsteilnehmers (Kom2) zu erhalten, wobei nach Erhalt einer Antwort eine wenigstens unidirektionale Kommunikation zwischen den Kommunikationsteilnehmern (Kom1, Kom2) stattfindet, **dadurch gekennzeichnet, dass** im Synchronisationstelegramm eine Information übermittelt wird über einen Empfangskanal (K1, K2, K3), in welchem der das Synchronisationstelegramm sendende Kommunikationsteilnehmer (Kom1) die Antwort erwartet, wobei der Empfangskanal (K1, K2, K3) festgelegt wird aus einer Gruppe möglicher Empfangskanäle (K1, K2, K3), die hinsichtlich eines Qualitätsmaßes vom sendenden Kommunikationsteilnehmer (Kom1) überprüft werden, wobei für jeden Empfangskanal (K1, K2, K3) separat mindestens ein Qualitätsmaß als ein Zahlenwert (R_{K1}, R_{K2}, R_{K3}) in einem Register gespeichert wird und für die folgende Kommunikation derjenige Kanal (K1, K2, K3) festgelegt wird, für den das höchste Qualitätsmaß hinterlegt ist und nach der Aktualisierung des Qualitätsmaßes eines Kanals (K1, K2, K3) eine Erhöhung des gespeicherten Qualitätsmaßes zumindest der übrigen Kanäle (K2, K3; K1, K3; K1, K2) erfolgt.

2. Verfahren nach Anspruch 1, **dadurch gekennzeichnet, dass** auch in der Antwort eine Information übermittelt wird über einen für die folgende Rückantwort zu verwendenden Empfangskanal (K1, K2, K3), insbesondere der aus derselben Gruppe festgelegt ist.

3. Verfahren nach einem der vorherigen Ansprüche, **dadurch gekennzeichnet, dass** als Qualitätsmaß ein Meßwert herangezogen wird, insbesondere der die gemessene Feldstärke oder Leistung auf dem Kanal (K1, K2, K3) repräsentiert.

4. Verfahren nach Anspruch 3, **dadurch gekennzeichnet, dass** ein Qualitätsmaß für den Kanal (K1, K2, K3) gebildet wird aus dem aktuellen Meßwert und/oder vorangegangenen Messwerten, durch Anwendung eines Filters, insbesondere eines Tiefpassfilters, insbesondere wobei das Qualitätsmaß als hoch bezeichnet wird, wenn der Messwert niedrige Leistung oder Feldstärke anzeigt.

5. Verfahren nach einem der vorherigen Ansprüche, **dadurch gekennzeichnet, dass** der Meßwert gemessen wird in einem Empfangsfenster eines Kommunikationsteilnehmers (Kom1), wenn innerhalb dieses Empfangsfensters keine Nachricht des anderen Kommunikationsteilnehmers (Kom2) empfangen wird.

6. Verfahren nach einem der vorherigen Ansprüche, **dadurch gekennzeichnet, dass** beide Kommunikationsteilnehmer (Kom1, Kom2) verschiedene Empfangskanäle (K1, K2, K3) verwenden, insbesondere die sie sich jeweils in einer vorherigen Funkübertragung mitteilen.

7. Verfahren nach einem der vorherigen Ansprüche, **dadurch gekennzeichnet, dass** die Dimension der Erhöhung des Qualitätsmaßes für verschiedene Kanäle (K1, K2, K3) unterschiedlich hoch ist, um dadurch die Benutzungshäufigkeit der Kanäle (K1, K2, K3) zu steuern.

8. Verfahren nach Anspruch 7, **dadurch gekennzeichnet, dass** die Dimension der Erhöhung des Qualitätsmaßes aller Kanäle (K1, K2, K3) von der Häufigkeit der Änderung der Kanalbelegung abhängt, um einen häufigen Kanalwechsel zu vermeiden.

9. Verfahren nach einem der vorherigen Ansprüche, **dadurch gekennzeichnet, dass** bei Unterschreiten eines bestimmten Qualitätsmaßes in einem Kanal (K1, K2, K3) unmittelbar nach Bestimmung des Qualitätsmaßes ein erneutes Synchronisationstelegramm ausgesendet wird, in welchem ein neuer Kanal (K1, K2, K3) festgelegt ist.

10. Verfahren nach einem der vorherigen Ansprüche, **dadurch gekennzeichnet, dass** die Aussendung von Synchronisationstelegrammen nach n Versuchen abgebrochen wird, wobei n > 1 und n<1000 ist.

11. System umfassend mehrere Kommunikationsteilnehmer (Kom1, Kom2), das eingerichtet ist, zur Durchführung einer bidirektionalen Funkkommunikation zwischen zwei Kommunikationsteilnehmern (Kom1, Kom2) von einem der Kommunikationsteilnehmer (Kom1) ein kommunikationseinleitendes Synchronisationstelegramm auszusenden und von dem anderen Kommunikationsteilnehmer (Kom2) zu empfangen, durch den das Synchronisationstelegramm sendenden Kommunikationsteilnehmer (Kom1) nach der Aussendung wenigstens ein zeitliches Empfangsfenster zu öffnen, um eine Antwort des das Synchronisationstelegramm empfangenden Kommunikationsteilnehmers (Kom2) zu erhalten, und sodass nach Erhalt einer Antwort eine wenigstens unidirektionale Kommunikation zwischen den Kommunikationsteilnehmern (Kom1, Kom2) stattfindet, **dadurch gekennzeichnet, dass** es eingerichtet ist, im Synchronisationstelegramm eine Information zu übermitteln über einen Empfangskanal (K1, K2, K3), in welchem der das Synchronisationstelegramm sendende Kommunikationsteilnehmer (Kom1) die Antwort erwartet, wobei der Empfangskanal (K1, K2, K3) festgelegt ist aus einer Gruppe möglicher Empfangskanäle (K1, K2, K3), die hinsichtlich eines Qualitätsmaßes vom sendenden Kommunikationsteilnehmer (Kom1) überprüft sind, und es zusätzlich eingerichtet ist, für jeden Empfangskanal (K1, K2, K3) separat mindestens ein Qualitätsmaß als ein Zahlenwert (R_{K1}, R_{K2}, R_{K3}) in einem Register zu speichern, für die folgende Kommunikation denjenigen Kanal (K1, K2, K3) festzulegen, für den das höchste Qualitätsmaß hinterlegt ist, und nach der Aktualisierung des Qualitätsmaßes eines Kanals (K1, K2, K3) eine Erhöhung des gespeicherten Qualitätsmaßes zumindest der übrigen Kanäle (K2, K3; K1, K3; K1, K2) vorzunehmen.

12. System nach Anspruch 11, **dadurch gekennzeichnet, dass** es gebildet wird durch mehrere vernetzte oder unvernetzte Funksensoren in einer Liegenschaft, die mit einem mobilen oder stationären Datensammelgerät kommunizieren, wobei die Funksensoren und das Datensammelgerät die Kommunikationsteilnehmer bilden.

13. System nach einem der vorherigen Ansprüche 11 oder 12, **dadurch gekennzeichnet, dass** die Funksensoren gebildet sind durch Energiekostenverteiler und/oder Gefahrenmelder.

## Claims

1. Method for bidirectional radio communication between two communication subscribers (Kom1, Kom2), in which one communication subscriber (Kom1) transmits a communication-initiating synchronization message that is received by the other communication subscriber (Kom2), after which the communication subscriber (Kom1) sending the synchronization message opens at least one reception time window in order to obtain a response from the communication subscriber (Kom2) receiving the synchronization message, wherein obtainment of a response is followed by an at least unidirectional communication taking place between the communication subscribers (Kom1, Kom2), **characterized in that** the synchronization message is used to transmit a piece of information about a reception channel (K1, K2, K3) on which the communication subscriber (Kom1) sending the synchronization message expects the response, wherein the reception channel (K1, K2, K3) is stipulated from a group of possible reception channels (K1, K2, K3) that are checked by the sending communication subscriber (Kom1) for a measure of quality, wherein at least one measure of quality is stored for each reception channel (K1, K2, K3) separately as a numerical value (R_{K1}, R_{K2}, R_{K3}) in a register and that channel (K1, K2, K3) for which the highest measure of quality is stored is stipulated for the subsequent communication and the updating of the measure of quality of one channel (K1, K2, K3) is followed by the stored measure of quality of at least the other channels (K2, K3; K1, K3; K1, K2) being increased.

2. Method according to Claim 1, **characterized in that** the response is also used to transmit a piece of information about a reception channel (K1, K2, K3), in particular stipulated from the same group, to be used for the subsequent reply.

3. Method according to either of the preceding claims, **characterized in that** the measure of quality used is a measured value, in particular representing the measured field strength or power on the channel (K1, K2, K3).

4. Method according to Claim 3, **characterized in that** a measure of quality for the channel (K1, K2, K3) is formed from the current measured value and/or past measured values, by applying a filter, in particular a low-pass filter, in particular wherein the measure of quality is denoted as high if the measured value indicates low power or field strength.

5. Method according to one of the preceding claims, **characterized in that** the measured value is measured in a reception window of a communication subscriber (Kom1) if no message from the other communication subscriber (Kom2) is received inside this reception window.

6. Method according to one of the preceding claims, **characterized in that** the two communication subscribers (Kom1, Kom2) use different reception channels (K1, K2, K3), in particular which they each communicate to one another in a prior radio transmission.

7. Method according to one of the preceding claims, **characterized in that** the dimension of the increase in the measure of quality for different channels (K1, K2, K3) is of a different level in order thereby to control the frequency of use of the channels (K1, K2, K3).

8. Method according to Claim 7, **characterized in that** the dimension of the increase in the measure of quality of all channels (K1, K2, K3) is dependent on the frequency of the change in the channel occupancy in order to avoid a frequent change of channel.

9. Method according to one of the preceding claims, **characterized in that** if a particular measure of quality is not reached in one channel (K1, K2, K3), determination of the measure of quality is followed immediately by a fresh synchronization message being transmitted in which a new channel (K1, K2, K3) is stipulated.

10. Method according to one of the preceding claims, **characterized in that** the transmission of synchronization messages is terminated after n attempts, where n > 1 and n < 1000.

11. System comprising possible communication subscribers (Kom1, Kom2) that is set up to perform a bidirectional radio communication between two communication subscribers (Kom1, Kom2) by transmitting a communication-initiating synchronization message from one of the communication subscribers (Kom1) and receiving said synchronization message on the other communication subscriber (Kom2), to use the communication subscriber (Kom1) sending the synchronization message to open at least one reception time window after the transmission in order to obtain a response from the communication subscriber (Kom2) receiving the synchronization message, and so that obtainment of a response is followed by an at least unidirectional communication taking place between the communication subscribers (Kom1, Kom2), **characterized in that** said system is set up to use the synchronization message to transmit a piece of information about a reception channel (K1, K2, K3) on which the communication subscriber (Kom1) sending the synchronization message expects the response, wherein the reception channel (K1, K2, K3) is stipulated from a group of possible reception channels (K1, K2, K3) that are checked by the sending communication subscriber (Kom1) for a measure of quality, and said system is additionally set up to store at least one measure of quality for each reception channel (K1, K2, K3) separately as a numerical value (R_{K1}, R_{K2}, R_{K3}) in a register, to stipulate that channel (K1, K2, K3) for which the highest measure of quality is stored for the subsequent communication and to follow the updating of the measure of quality of one channel (K1, K2, K3) by increasing the stored measure of quality of at least the other channels (K2, K3; K1, K3; K1, K2) .

12. System according to Claim 11, **characterized in that** it is formed by multiple networked or unnetworked radio sensors on a property that communicate with a mobile or static data collection device, wherein the radio sensors and the data collection device form the communication subscribers.

13. System according to either of the preceding Claims 11 and 12, **characterized in that** the radio sensors are formed by energy cost distributors and/or hazard detectors.

## Revendications

1. Procédé de communication radio bidirectionnelle entre deux correspondants de communication (Kom1, Kom2), dans lequel un correspondant de communication (Kom1) émet un télégramme de synchronisation initiateur de communication qui est reçu par l'autre correspondant de communication (Kom2), puis le correspondant de communication (Kom1) émettant le télégramme de synchronisation ouvre au moins une fenêtre temporelle de réception afin d'obtenir une réponse du correspondant de communication (Kom2) recevant le télégramme de synchronisation, dans lequel une communication au moins unidirectionnelle a lieu entre les participants de communication (Kom1, Kom2) après réception d'une réponse,
**caractérisé en ce qu'**une information est transmise dans le télégramme de synchronisation par l'intermédiaire d'un canal de réception (K1, K2, K3) dans lequel le correspondant de communication (Kom1) émettant le télégramme de synchronisation attend la réponse, dans lequel le canal de réception (K1, K2, K3) est établi à partir d'un groupe de canaux de réception (K1, K2, K3) possibles qui sont vérifiés en ce qui concerne une mesure de qualité par le correspondant de communication émetteur (Kom1), dans lequel, pour chaque canal de réception (K1, K2, K3), au moins une mesure de qualité est stockée séparément dans un registre sous la forme d'une valeur numérique (R_{K1}, R_{K2}, R_{K3}) et, pour la communication suivante, le canal (K1, K2, K3) pour lequel la mesure de qualité la plus élevée est stockée est établi et, après l'actualisation de la mesure de qualité d'un canal (K1, K2, K3), une augmentation de la mesure de qualité stockée d'au moins les canaux restants (K2, K3 ; K1, K3 ; K1, K2) est effectuée.

2. Procédé selon la revendication 1, **caractérisé en ce qu'**une information est également transmise dans la réponse par l'intermédiaire d'un canal de réception (K1, K2, K3) devant être utilisé pour la réponse suivante et qui est établi à partir du même groupe.

3. Procédé selon l'une des revendications précédentes, **caractérisé en ce qu'**une valeur de mesure, qui représente en particulier l'intensité de champ ou la puissance mesurée sur le canal (K1, K2, K3), est utilisée en tant que mesure de qualité.

4. Procédé selon la revendication 3, **caractérisé en ce qu'**une mesure de qualité du canal (K1, K2, K3) est constituée par la valeur de mesure actuelle et/ou par des valeurs de mesure précédentes, par application d'un filtre, en particulier d'un filtre passe-bas, dans lequel, en particulier, la mesure de qualité est considérée comme étant élevée si la valeur de mesure indique une faible puissance ou intensité de champ.

5. Procédé selon l'une des revendications précédentes, **caractérisé en ce que** la valeur de mesure est mesurée dans une fenêtre de réception d'un correspondant de communication (Kom1) si aucun message de l'autre correspondant de communication (Kom2) n'est reçu à l'intérieur de ladite fenêtre de réception.

6. Procédé selon l'une des revendications précédentes, **caractérisé en ce que** les deux correspondants de communication (Kom1, Kom2) utilisent des canaux de réception (K1, K2, K3) différents qui communiquent en particulier respectivement entre eux lors d'une transmission radio précédente.

7. Procédé selon l'une des revendications précédentes, **caractérisé en ce que** l'importance de l'augmentation de la mesure de qualité de différents canaux (K1, K2, K3) est différemment élevée afin de commander ainsi la fréquence d'utilisation des canaux (K1, K2, K3).

8. Procédé selon la revendication 7, **caractérisé en ce que** l'importance de l'augmentation de la mesure de qualité de tous les canaux (K1, K2, K3) dépend de la fréquence de changement d'allocation des canaux afin d'éviter des changements de canaux fréquents.

9. Procédé selon l'une des revendications précédentes, **caractérisé en ce que** si une mesure de qualité déterminée n'est pas atteinte dans un canal (K1, K2, K3), un télégramme de synchronisation renouvelé dans lequel un nouveau canal (K1, K2, K3) est établi est transmis immédiatement après la détermination de la mesure de qualité.

10. Procédé selon l'une des revendications précédentes, **caractérisé en ce que** l'émission de télégrammes de synchronisation est interrompue après n tentatives, dans lequel n>1 et n<1000.

11. Système comprenant une pluralité de correspondants de communication (Kom1, Kom2) qui est conçu, à des fins d'établissement d'une communication radio bidirectionnelle entre deux correspondants de communication (Kom1, Kom2), de manière à ce qu'un télégramme de synchronisation initiateur de communication soit émis par l'un des correspondants de communication (Kom1) et soit reçu par l'autre correspondant de communication (Kom2), à ce que, après l'émission, au moins une fenêtre temporelle de réception soit ouverte par le correspondant de communication (Kom1) émettant le télégramme de synchronisation afin d'obtenir une réponse du correspondant de communication (Kom2) recevant le télégramme de synchronisation, et de manière à ce que, après l'obtention d'une réponse, une communication au moins unidirectionnelle ait lieu entre les correspondants de communication (Kom1, Kom2), **caractérisé en ce qu'**il est conçu pour transmettre une information dans le télégramme de synchronisation par l'intermédiaire d'un canal de réception (K1, K2, K3) dans lequel le correspondant de communication (Kom1) transmettant le télégramme de synchronisation attend la réponse, dans lequel le canal de réception (K1, K2, K3) est établi à partir d'un groupe de canaux de réception (K1, K2, K3) possibles qui sont vérifiés en ce qui concerne une mesure de qualité par le correspondant de communication émetteur (Kom1), et **en ce qu'**il est en outre conçu pour stocker séparément dans un registre, pour chaque canal de réception (K1, K2, K3), au moins une mesure de qualité sous la forme d'une valeur numérique (R_{K1}, R_{K2}, R_{K3}), pour établir, pour la communication suivante, le canal (K1, K2, K3) pour lequel la mesure de qualité la plus élevée est stockée et, après l'actualisation de la mesure de qualité d'un canal (K1, K2, K3), pour effectuer une augmentation de la mesure de qualité stockée d'au moins les canaux restants (K2, K3 ; K1, K3 ; K1, K2).

12. Système selon la revendication 11, **caractérisé en ce qu'**il est constitué par une pluralité de capteurs radio en réseau ou non en réseau situés dans un immeuble, qui communiquent avec un appareil de collecte de données mobile ou fixe, dans lequel les capteurs radio et l'appareil de collecte de données constituent les participants de communication.

13. Système selon l'une des revendications 11 ou 12 précédentes, **caractérisé en ce que** les capteurs radio sont constitués par des répartiteurs de consommation d'énergie et/ou des avertisseurs de danger.
